# EUROPÄISCHE PATENTSCHRIFT

(11) **EP 2 342 093 B1**
(45) Veröffentlichungstag und Bekanntmachung des Hinweises auf die Patenterteilung: **14.11.2012**
(21) Anmeldenummer: 09778548.9
(22) Anmeldetag: 16.09.2009
(51) Int. Cl.: B60G 3/06, B60G 7/00, B60G 17/015, B62D 17/00

(54) **VERFAHREN ZUR HERSTELLUNG VON FAHRZEUGEN UNTERSCHIEDLICHER VARIANTEN SOWIE RADAUFHÄNGUNG FÜR EIN FAHRZEUG**
METHOD FOR PRODUCING VEHICLES OF DIFFERENT VERSIONS AND WHEEL SUSPENSION FOR A VEHICLE
PROCÉDÉ DE FABRICATION DE DIFFÉRENTES VARIANTES DE VÉHICULES ET SUSPENSION DE ROUE POUR UN VÉHICULE

(30) Priorität: 31.10.2008 DE 102008052161
(43) Veröffentlichungstag der Anmeldung: 13.07.2011
(73) Patentinhaber: Audi AG, 85045 Ingolstadt (DE)
(72) Erfinder: KOSSIRA, Christoph, 85053 Ingolstadt (DE); MÜLLER, Hugo, 86701 Rohrenfels-Ballersdorf (DE); MICHEL, Wilfried, 93339 Riedenburg (DE); MEITINGER, Karl-Heinz, 81667 München (DE); SCHMID, Wolfgang, 85354 Freising (DE)
(74) Vertreter: Asch, Konrad
(86) Internationale Anmeldenummer: PCT/EP2009/006687
(87) Internationale Veröffentlichungsnummer: WO 2010/049037

(56) Entgegenhaltungen:
- WO-A1-98/16418
- WO-A1-2007/118629
- WO-A1-2009/052914
- DE-A1-102004 049 296
- DE-A1-102005 023 250
- US-A1- 2002 036 385

## Beschreibung

Die Erfindung betrifft ein Verfahren zur Herstellung von Fahrzeugen unterschiedlicher Varianten einer Fahrzeugbaureihe nach dem Oberbegriff des Patentanspruches 1 sowie eine Radaufhängung für ein Fahrzeug nach dem Oberbegriff des Patentanspruches 2.

In der Großserienproduktion von Fahrzeugen umfasst eine Fahrzeugbaureihe Fahrzeugvarianten unterschiedlicher Motorisierung sowie unterschiedliche Ländervarianten. Derartige Fahrzeugvarianten weisen aus wirtschaftlichen Gründen ein gemeinsames Achskonzept für die Vorder- und Hinterräder auf. Das heißt, dass die Fahrzeuge unabhängig von länderspezifischen Anforderungen bzw. der Motorisierung die Fahrzeugvarianten mit baugleichen Radaufhängungen ausgerüstet sind.

So steht insbesondere bei Fahrzeug-Varianten niedriger Motorisierung der Fahrkomfort im Vordergrund, das heißt bei Einwirken von Seiten- oder Längskräften erfolgt eine Eigenlenkbewegung der Radaufhängung, wodurch die Spur/der Sturz des Fahrzeugrads verstellt wird. Bei hochmotorisierten, sportlichen Varianten werden dagegen fahrdynamisch höhere Anforderungen mit entsprechend aufwendiger, kostenintensiveren Fahrwerken gestellt. Hierzu ist die Radaufhängung mit Stellgliedern zur aktiven Verstellung von Spur/Sturz des Fahrzeugrads auszurüsten.

Aus der WO-A-98/16418 ist ein gattungsgemäßes Verfahren zur Herstellung von Fahrzeugen unterschiedlicher Varianten bekannt. Demzufolge kann ein Verstellmechanismus für den Sturz und/oder für die Spur des Fahrzeugrades blockiert bzw. nicht aktiviert werden. Aus der DE-A-10 2004 049 296 ist ein Stellglied für eine Radaufhängung eines Kraftfahrzeuges bekannt. Das Stellglied weist einen Verstellring und einen Komplementärring auf. Der Verstellring ist in dem Komplementärring gelagert. Der Komplementärring ist wiederum in dem Radträger gelagert. Dadurch ergibt sich eine radial ineinander verschachtelte Anordnung.

Die Aufgabe der Erfindung besteht darin, ein Verfahren zur Herstellung von Fahrzeugen bzw. eine Radaufhängung für ein Fahrzeug bereitzustellen, die mit einfacher Modifizierung kostengünstig an unterschiedliche Anforderungen hinsichtlich Fahrkomfort und Fahrdynamik anpassbar ist.

Diese Aufgabe wird erfindungsgemäß mit den Merkmalen des Patentanspruches 1 oder des Patentanspruches 2 gelöst. Vorteilhafte Weiterbildungen der Erfindung sind in den Unteransprüchen angeführt.

Gemäß dem kennzeichnenden Teil des Patentanspruches 1 kann in einer Komfortvariante von herzustellenden Fahrzeugen zwischen dem Radführungsteil einer Radaufhängung, bei dem üblicherweise das Fahrzeugrad unmittelbar drehbar gelagert ist, und dem Fahrzeugrad in Axialrichtung ein zusätzliches Stellglied zum Verstellen von Sturz und/oder Spur des Fahrzeugrads zwischengeschaltet werden.

Bei Fahrzeug-Varianten mit hohen Ansprüchen bezüglich der Fahrdynamik kann somit zwischen dem Radträger bzw. Radführungsteil der Radaufhängung und dem Fahrzeugrad als Anbauteil das Stellglied zwischengeschaltet werden. Auf diese Weise kann durch Ansteuerung des Stellgliedes eine Spur- und Sturzverstellung des Fahrzeugrades erfolgen. Steht demgegenüber nicht die Fahrdynamik, sondern der Fahrkomfort im Vordergrund, so wird das Fahrzeugrad unter Weglassung des Stellglieds unmittelbar an dem Radträger bzw. Radführungsteil der Radaufhängung drehbar gelagert.

Das erfindungsgemäße Anbau-Stellglied kann in Axialrichtung bzw. Fahrzeugquerrichtung außerhalb der Radaufhängung, das heißt außenseitig am Radträger der Radaufhängung angebracht werden. Auf diese Weise kann für eine Fahrzeug-Grundvariante eine einfache Achskonstruktion ohne aktive Spur-/Sturzverstellung verbaut werden. Bei der Herstellung von Fahrzeugen mit hohem Fahrdynamikanspruch kann in einfacher Weise das Anbau-Stellglied an die einfach ausgeführte Komfortachse montiert werden. In diesem Fall ist somit das Fahrzeugrad nicht unmittelbar im Radträger, sondern am zwischengeschalteten Stellglied gelagert.

Das Stellglied ist erfindungsgemäß für einen einfachen Anbau in ein das Rad aufnehmendes Trägerteil, ein mit der Radaufhängung verbundenes, achsseitiges Trägerteil und in zwei dazwischen angeordnete und zueinander, sowie zum radseitigen Trägerteil und zum achsseitigen Trägerteil um eine gemeinsame Drehachse verdrehbare Stellelemente unterteilt, die mit einander zugewandten, um einen definierten Winkel zur Drehachse geneigten Schrägflächen zusammenwirken. Über die beiden Stellelemente können bei fahrdynamisch anspruchsvollen Varianten die Radstellungen, insbesondere der Sturz und die Spur der Räder abhängig von fahrdynamischen Parametern, Beladungszuständen, etc. aktiv verstellt werden. Ansonsten können bei niedrigeren Motorisierungen oder anderen länderspezifischen Vorgaben im Wesentlichen baugleiche Radaufhängungen mit festen Adapterteilen der Stellelemente oder einteilige Radführungselemente verbaut sein. Fertigungstechnisch besonders günstig können die Stellelemente rotationssymmetrische Stellzylinder sein, von denen einer am achsseitigen Trägerteil und der andere am radseitigen Trägerteil drehbar gelagert sind, wobei beide Stellzylinder über eine zu den Schrägflächen senkrechte Drehachse miteinander verbunden sind.

Des weiteren sind erfindungsgemäß die Stellelemente über zwei am achsseitigen Trägerteil und am radseitigen Trägerteil angeordnete, ansteuerbare Antriebe einzeln oder gemeinsam in gleichsinniger oder gegensinniger Drehrichtung verdrehbar. Damit gelingt es, bei einer baulich einfachen und besonders robusten Konstruktion die Räder im Rahmen der durch die Neigung der Schrägflächen vorgegebenen Stellwege ähnlich einer Kugelgelenkverstellung in alle Freiheitsgrade zu verschwenken bzw. einzustellen und dabei für den Fahrbetrieb besonders stabile Radführungsstellungen sicherzustellen.

Die Antriebe der Stellelemente können bevorzugt Elektromotoren sein, die unmittelbar oder mittelbar über ein Getriebe auf die Stellelemente wirken. In einer unmittelbaren Anordnung können die Stellelemente zugleich die Rotoren der Elektromotoren tragen bzw. mit diesen eine Baueinheit bilden.

Um eine leichtgängige Verstellung der Stellelemente sicherzustellen, können die einander benachbarten Anlaufflächen zwischen dem radseitigen Trägerteil, dem achsseitigen Trägerteil und den Stellelementen und/oder die einander benachbarten Schrägflächen der Stellelemente über Axialwälzlager abgestützt sein.

Wie oben erwähnt, kann in der Fahrzeug-Komfortvariante das Fahrzeugrad unmittelbar im Radträger bzw. Radführungsteil drehbar gelagert sein, während in der Fahrdynamikvariante zwischen dem Fahrzeugrad und dem Radträger das Stellglied geschaltet ist. Das jeweilige Radführungsteil der Radaufhängung kann ein über Einzellenker und/oder Querlenker am Aufbau des Kraftfahrzeuges angelenkter, entsprechend unterteilter Radträger sein.

In einer weiteren bevorzugten Anwendung der Verstellvorrichtung kann das Radführungsteil ein Schräglenker einer hinteren, unabhängigen Radaufhängung des Kraftfahrzeuges sein, dessen konstruktiv bedingte nachteilige Spur- und Sturzänderungen beim Durchfedern der Räder entsprechend ausgleichbar sind.

Schließlich kann das jeweilige Radführungsteil auch an den Längsarm einer Verbundlenker-Hinterachse für Kraftfahrzeuge angebaut sein, dessen elastokinematische Steuertendenz durch gezielte Spursteuerung veränderbar, insbesondere untersteuernd auslegbar ist.

Mehrere Ausführungsbeispiele der Erfindung sind im folgenden mit weiteren Einzelheiten näher erläutert. Die schematische Zeichnung zeigt in:
- Fig. 1: eine Ansicht des als Anbauteil ausgeführten Stellglieds zum Verstellen des Sturzes und der Spur eines Rades einer Radaufhängung für Kraftfahrzeuge, mit einem radseitigen Trägerteil, einem achsseitigen Trägerteil und zwei dazwischen positionierten Stellelementen,
- Fig. 2: skizzenhaft in einer Fahrdynamikvariante eine Radaufhängung mit einem oberen und einem unteren Querlenker und mit einem Radträger, an dem das Stellglied vorgesehen ist,
- Fig. 3: ebenfalls skizzenhaft eine hintere Radaufhängung für Kraftfahrzeuge, mit einem radführenden Schräglenker als Radführungsteil, der entsprechend Fig. 2 mit dem Stellglied ausgerüstet ist,
- Fig. 4: in weiterer skizzenhafter Darstellung abschnittsweise eine ebenfalls in Fahrdynamikvariante ausgeführte Verbundlenker-Hinterachse für Kraftfahrzeuge.

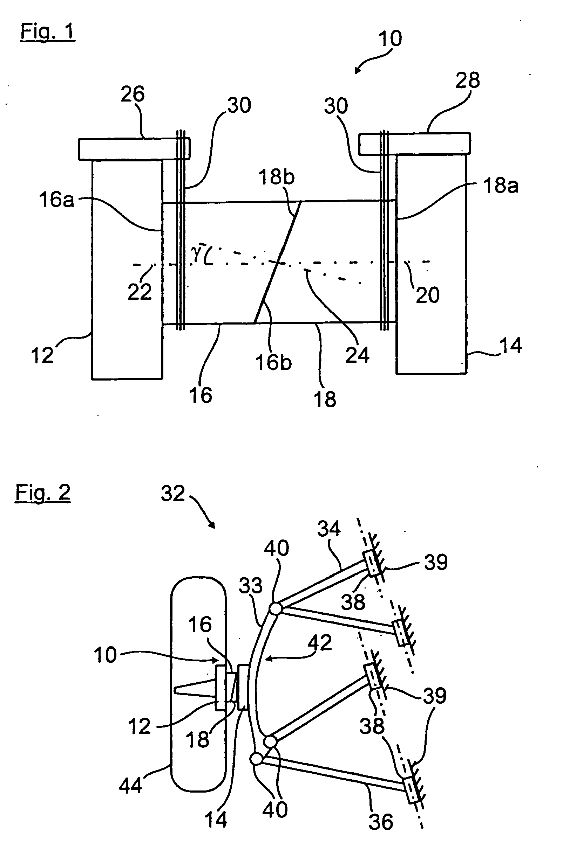

Die Fig. 1 zeigt zur theoretischen Erläuterung der Erfindung als Blockschaltbild ein Stellglied 10 für in den weiteren Figuren gezeigten Radaufhängungen für Kraftfahrzeuge, das zur Verstellung des Sturzes und/oder der Spur des Rades im Bereich der Radlagerung wie folgt unterteilt ist: Das Stellglied 10 weist ein radseitiges Trägerteil 12 auf, in dem das Rad und das Bremselement (Bremsscheibe, Bremstrommel) einer Betriebsbremse des Kraftfahrzeuges drehbar gelagert ist. Es sei bemerkt, dass soweit nicht beschrieben die Funktionsteile der Radaufhängung bekannter Bauart sein können.

Ferner weist das Stellglied 10 ein achsseitiges Trägerteil 14 auf, das in noch zu beschreibender Weise mit der Radaufhängung zusammenwirkt bzw. ein zusätzliches Anbauteil der Radaufhängung bildet.

Zwischen dem radseitigen Trägerteil 12 und dem achsseitigen Trägerteil 14 sind als Stellelemente zwei im Wesentlichen rotationssymmetrische Stellzylinder 16, 18 vorgesehen, die jeweils über separate Drehachsen 20, 22 verdrehbar mit dem radseitigen Trägerteil 12 bzw. dem achsseitigen Trägerteil 14 verbunden sind. Die beiden Drehachsen 20, 22 sind koaxial ausgerichtet und verlaufen bevorzugt in der nicht dargestellten Raddrehachse.

Während die dem radseitigen Trägerteil 12 und dem achsseitigen Trägerteil 14 unmittelbar benachbarten Anlaufflächen 16a, 18a der Stellzylinder 16, 18 rotationssymmetrisch ausgeführt sind, liegen die Stellzylinder 16, 18 über plane Schrägflächen 16b, 18b aneinander an und sind über eine Drehachse 24 verdrehbar miteinander verbunden. Die Drehachse 24 ist dabei wie ersichtlich senkrecht zu den Schrägflächen 16b, 18b und in einem definierten Winkel γ zu den Drehachsen 20, 22 geneigt ausgerichtet.

Die besagten Drehachsen 20, 22, 24 sind real durch Führungsbolzen (nicht dargestellt) oder dergleichen gebildet, auf denen die Stellzylinder 16, 18 in axialer Richtung formschlüssig und spielfrei geführt sind. Zwischen den Anlaufflächen 16a, 18a und den Schrägflächen 16b, 18b sind Axialwälzlager eingesetzt, die ein leichtgängiges und im Wesentlichen verschleißfreies Verdrehen der Stellzylinder 16, 18 ermöglichen.

Am radseitigen Trägerteil 12 und am achsseitigen Trägerteil 14 ist jeweils ein elektromotorischer Antrieb 26, 28 vorgesehen, der über jeweils ein nur angedeutetes Getriebe 30, z. B. einem Zahnriementrieb, mit den Stellzylindern 16, 18 verbunden ist. Mittels der Antriebe 26, 28 können die Stellzylinder 16, 18 gleichzeitig oder getrennt in beide Drehrichtungen verdreht werden.

Die Antriebe 26, 28 können auch durch mit den Stellzylindern 16, 18 kombinierte Elektromotoren (nicht dargestellt) gebildet sein, wobei die Rotoren der Elektromotoren auf den Stellzylindern 16, 18 unmittelbar ringförmig angeordnet sind und von den am radseitigen Trägerteil 12 und am achsseitigen Trägerteil 14 befestigten Statoren umschlossen sind.

Bevorzugt erfolgt der Antrieb der Stellzylinder 16, 18 über eine feed-back-Regelung zur Sicherstellung einer präzisen Verstellung der Radeinstellwerte abhängig von fahrdynamischen Parametern, Beladungszuständen, etc. Dazu kann über entsprechende Winkelmesseinrichtungen die Istwinkelstellung der Stellzylinder 16, 18 regelungstechnisch erfasst und ausgewertet werden.

Durch ein gleichsinniges Verdrehen der beiden Stellzylinder 16, 18 erfolgt unmittelbar keine Verstellung des Sturzes oder der Spur des an dem Trägerteil 12 gelagerten Rades. Jedoch wird die durch die Schrägflächen 16b, 18b definierte, schräge Ebene "vorgewählt", aus der heraus unter nunmehr gegensinnigem Verdrehen der Stellzylinder 16, 18 oder gegebenenfalls nur separatem Verdrehen eines der Stellzylinder 16, 18 der Radsturz oder die Spur des Rades oder gegebenenfalls beide Einstellwerte zugleich verstellt werden, wobei das Trägerteil 12 relativ zum Führungsteil 14 entsprechend verschwenkt wird.

Liegt z. B. die besagte schräge Ebene mit ihrer Längserstreckung in horizontaler Ausrichtung, so erfolgt bei einem Verdrehen des Stellzylinders 16 eine Spurverstellung des Rades, während bei einer vertikalen Ausrichtung eine Sturzverstellung bewirkt wird. In definierten Zwischenstellungen der Stellzylinder 16, 18 können Radsturz und Spur gleichzeitig verstellt werden.

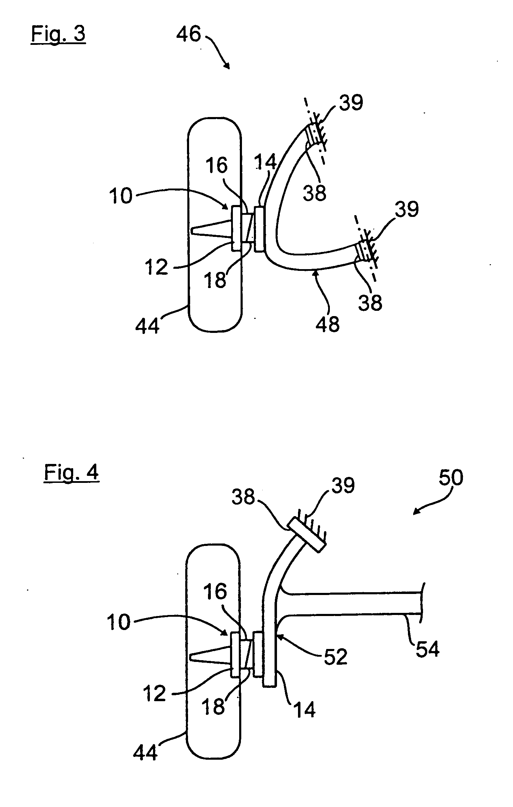

Die Fig. 2 zeigt nur skizzenhaft eine hintere Radaufhängung 32 für ein Kraftfahrzeug, an der das Stellglied 10 angebaut ist. Das Stellglied 10 ist dabei einem Radträger bzw. Radführungsteil 42 der Radaufhängung und dem Fahrzeugrad 44 zwischengeschaltet. Das Radführungsteil 33 ist über einem Lenkerverband am Fahrzeugaufbau 39 angelenkt. Dieser weist einen oberen Querlenker 34 und einen unteren Querlenker 36 auf, die über allgemein mit 38 bezeichnete Schwenklager am Aufbau 39 des Kraftfahrzeuges (oder an einem Hilfsrahmen) und über Schwenklager 40 an dem Radträger 42 als Radführungsteil angelenkt sind. Die Radaufhängung 32 kann im übrigen bekannter Bauart und Funktion sein. Dies gilt auch für die zu den Fig. 3 und 4 noch zu beschreibenden Radaufhängungen 46, 50.

Das zwischen Fahrzeugrad 44 und Radträger 42 geschaltete Stellglied 10 dient, wie zur Fig. 1 beschrieben, zur Verstellung des Sturzes und der Spur des Rades 44 und ist unterteilt in ein das Rad aufnehmendes Trägerteil 12, das achsseitige Trägerteil 14 und die zwei verdrehbar angeordneten Stellzylinder 16, 18.

Damit können über die Stellzylinder 16, 18 mit deren Antrieben 26, 28 konstruktionsbedingte Sturzveränderungen über die Raderhebungskurve ausgeglichen und z. B. durch Seitenkräfte sich ergebende Spuränderungen korrigiert werden. Ferner können z. B. beim Durchfahren von Kurven gezielte Steuertendenzen im Fahrverhalten des Kraftfahrzeuges, gegebenenfalls beladungsabhängig, eingestellt werden.

In einem alternativen Ausführungsbeispiel gemäß Fig. 3 ist die hintere Radaufhängung 46 für Kraftfahrzeuge als Schräglenkerachse ausgebildet, mit einem Schräglenker 48 als Radträger bzw. Radführungsteil, das über Schwenklager 38 am Aufbau 39 angelenkt ist.

Der Schräglenker 48 ist im Bereich der Radlagerung des Rades 44 mit dem Stellglied 10 vorgesehen, das unterteilt ist in ein das Rad aufnehmendes Trägerteil 12, in ein Führungsteil 14 (hier der restliche Schräglenker 48) und in die zwei wie in Fig. 1 beschriebenen Stellzylinder 16, 18.

Über die Stellzylinder 16, 18 und die Antriebe 26, 28 können wiederum konstruktionsbedingte, über die Raderhebungskurve sich ändernde Sturzwerte korrigiert und durch Seitenkräfte sich gegebenenfalls ergebende, elastokinematische Spuränderungen der Schräglenkerachse 46 ausgeglichen werden.

Die Fig. 4 schließlich zeigt als hintere Radaufhängung 50 für Kraftfahrzeuge eine Verbundlenkerachse, die sich im Wesentlichen aus zwei Längsarmen 52 (es ist in der teilweisen Darstellung nur ein Längsarm 52 ersichtlich, die andere Seite ist spiegelbildlich gleich) und einer biegesteifen, torsionsweichen Querstrebe 54 zusammensetzt. Die Längsarme 52 sind über Schwenklager 38 mit dem Aufbau 39 des Kraftfahrzeuges verbunden.

Die als Radführungselement bzw. Radträger dienenden Längsarme 52 sind wiederum gemäß Fig. 1 im Bereich der Radlagerung mit den Stellglied 10 vorgesehen, das unterteilt ist in ein Trägerteil 12, ein den übrigen Längsarm 52 umfassendes Führungsteil 14 und die zwei Stellzylinder 16, 18.

Mittels der Stellzylinder 16, 18 und der Antriebe 26, 28 kann insbesondere das Gehen in Nachspur des kurvenäußeren Rades 44 bei Seitenkräften durch entsprechende Spurverstellung ausgeglichen werden, oder falls erforderlich Vorspur zur Stabilisierung eingestellt werden. Gegebenenfalls kann dazu die Fahrstabilität weiter erhöht werden, wenn auch der Sturz der Räder ähnlich einer Schräglenkerachse nach negativ verstellt wird.

Neben den beschriebenen, bevorzugten Ausführungsbeispielen gemäß den Fig. 2 bis 4 kann die Verstellvorrichtung gemäß Fig. 1 auch für andere Achskonstruktionen verwendet sein.

## Patentansprüche

1. Verfahren zur Herstellung von Fahrzeugen unterschiedlicher Varianten, bei dem in einer Komfortvariante ein Fahrzeugrad (44) unmittelbar in einem Radführungsteil (42; 48; 52) einer Radaufhängung (32; 46; 50) drehbar gelagert wird, **dadurch gekennzeichnet,**
**dass** in einer Fahrdynamikvariante zwischen dem Radführungsteil (42; 48; 52) und dem Fahrzeugrad (44) in Axialrichtung als Anbauteil ein Stellglied (10) zum Verstellen von Sturz und/oder Spur des Fahrzeugrads geschaltet wird,
**dass** das Stellglied (10) unterteilt ist in ein das Rad (44) aufnehmendes Trägerteil (12), ein mit der Radaufhängung (32; 46; 50) verbundenes Trägerteil (14) und in zwei dazwischen angeordnete und zueinander sowie zu den Trägerteilen (12, 14) um eine gemeinsame Drehachse (20, 22) verdrehbare Stellelemente (16, 18), die mit einander zugewandten, um einen definierten Winkel (γ) zur Drehachse (20, 22) geneigten Schrägflächen (16b, 18b) zusammenwirken, und
**dass** die Stellelemente (16, 18) über zwei am radseitigen Trägerteil (12) und am achsseitigen Trägerteil (14) angeordnete, ansteuerbare Antriebe (26, 28) einzeln oder gemeinsam in gleichsinniger oder gegensinniger Drehrichtung verdrehbar sind.

2. Radaufhängung für ein Fahrzeug, insbesondere für ein Verfahren nach Anspruch 1, mit einem Radführungsteil (42; 48; 52), das über einen Lenkerverband (34, 36) an der Fahrzeugkarosserie (39) angebunden ist und in dem in einer Fahrzeug-Komfortvariante unmittelbar ein Fahrzeugrad (44) drehbar gelagert ist, **dadurch gekennzeichnet, dass** zur Bereitstellung einer Fahrdynamikvariante zwischen dem Fahrzeugrad (44) und dem Radführungsteil (42; 48; 52) als Anbauteil ein Stellglied (10) zwischenschaltbar ist, mit dem der Sturz und/oder die Spur des Fahrzeugrads (44) verstellbar ist,
dass in der Fahrdynamikvariante zwischen dem Radführungsteil (42; 48; 52) und dem Fahrzeugrad (44) in Axialrichtung ein Stellglied (10) zum Verstellen von Sturz und/oder Spur des Fahrzeugrads geschaltet wird,
dass das Stellglied (10) unterteilt ist in ein das Rad (44) aufnehmendes Trägerteil (12), ein mit der Radaufhängung (32; 46; 50) verbundenes Trägerteil (14) und in zwei dazwischen angeordnete und zueinander sowie zu den Trägerteilen (12,14) um eine gemeinsame Drehachse (20, 22) verdrehbare Stellelemente (16, 18), die mit einander zugewandten, um einen definierten Winkel (γ) zur Drehachse (20, 22) geneigten Schrägflächen (16b, 18b) zusammenwirken, und
dass die Stellelemente (16, 18) über zwei am radseitigen Trägerteil (12) und am achsseitigen Trägerteil (14) angeordnete, ansteuerbare Antriebe (26, 28) einzeln oder gemeinsam in gleichsinniger oder gegensinniger Drehrichtung verdrehbar sind.

3. Radaufhängung nach Anspruch 2, **dadurch gekennzeichnet, dass** die Stellelemente rotationssymmetrische Stellzylinder (16, 18) sind, von denen einer am radseitigen Trägerteil (12) und der andere am achsseitigen Trägerteil (14) drehbar gelagert ist, und dass beide Stellzylinder (16, 18) über eine zu den Schrägflächen (16b, 18b) senkrechte Drehachse (24) miteinander verbunden sind.

4. Radaufhängung nach Anspruch 2 oder 3, **dadurch gekennzeichnet, dass** die Antriebe (26, 28) Elektromotoren sind, die unmittelbar oder mittelbar über ein Getriebe (30) auf die Stellelemente (16, 18) wirken.

5. Radaufhängung nach einem der vorhergehenden Ansprüche 2 bis 4, **dadurch gekennzeichnet, dass** die einander benachbarten Anlaufflächen (16a, 18a) zwischen dem radseitigen Trägerteil (12), dem achsseitigen Trägerteil (14) und den Stellelementen (16, 18) und/oder die einander benachbarten Schrägflächen (16b, 18b) der Stellelemente (16, 18) über Axialwälzlager abgestützt sind.

6. Radaufhängung nach einem der Ansprüche 2 bis 5, **dadurch gekennzeichnet, dass** das Radführungsteil der Radaufhängung (32) ein über Einzellenker und/oder Querlenker (34, 36) am Aufbau (39) des Kraftfahrzeuges angelenkter Radträger (42) ist.

7. Radaufhängung nach einem der vorhergehenden Ansprüche 2 bis 6, **dadurch gekennzeichnet, dass** das Radführungsteil der Radaufhängung ein Schräglenker (48) einer hinteren, unabhängigen Radaufhängung (46) des Kraftfahrzeuges ist.

8. Radaufhängung nach einem der Ansprüche 2 bis 5, **dadurch gekennzeichnet, dass** das Radführungsteil ein Längsarm (52) einer Verbundlenker-Hinterachse (50) für Kraftfahrzeuge ist.

## Claims

1. Method for producing different vehicle models, in which in a comfort-oriented model a vehicle wheel (44) is rotatably mounted directly in a wheel guiding element (42; 48; 52) of a wheel suspension (32; 46; 50), **characterised in that** in a model with enhanced dynamics of vehicle motion an actuator (10) is connected as an attached part between the wheel guiding element (42; 48; 52) and the vehicle wheel (44) in the axial direction for adjusting the camber and/or track of the vehicle wheel, **in that** the actuator (10) is divided into a carrier part (12) which accommodates the wheel (44), a carrier part (14) which is connected to the wheel suspension (32; 46; 50), and two positioning elements (16, 18) which are located between said corner parts and which can be rotated relative to one another and to the carrier parts (12, 14) about a common axis of rotation (20, 22) and which cooperate with oblique surfaces (16b, 18b) which are facing each other and which are inclined by a defined angle (γ) to the axis of rotation (20, 22), and **in that** the positioning elements (16, 18) can be rotated individually or jointly in the same or opposite direction of rotation by means of two drives (26, 28) which can be actuated and which are located on the wheel-side carrier part (12) and on the axle-side carrier part (14).

2. Wheel suspension for a vehicle, in particular for a method according to claim 1, comprising a wheel guiding element (42; 48; 52) which is coupled by means of a combination of suspension links (34, 36) to the vehicle body (39) and in which in a comfort-oriented vehicle model the vehicle wheel (44) is directly rotatably mounted, **characterised in that** to provide a model with enhanced dynamics of vehicle motion between the vehicle wheel (44) and the wheel guiding element (42; 48; 52) an actuator (10) can be interposed as an attachment part, by means of which the camber and/or track of the vehicle wheel (44) can be adjusted, **in that** in a model with enhanced dynamics of vehicle motion an actuator (10) is connected between the wheel guiding element (42; 48; 52) and the vehicle wheel (44) in the axial direction for adjusting the camber and/or track of the vehicle wheel, **in that** the actuator (10) is divided into a carrier part (12) which accommodates the wheel (44), a carrier part (14) which is connected to the wheel suspension (32; 46; 50), and two positioning elements (16, 18) which are located between said carrier parts and which can be rotated relative to one another and to the carrier parts (12, 14) about a common axis of rotation (20, 22) and which cooperate with oblique surfaces (16b, 18b) which are facing each other and which are inclined by a defined angle (γ) to the axis of rotation (20, 22), and **in that** the positioning elements (16, 18) can be rotated individually or jointly in the same or opposite direction of rotation by means of two drives (26, 28) which can be actuated and which are located on the wheel-side carrier part (12) and on the axle-side carrier part (12).

3. Wheel suspension according to claim 2, **characterised in that** the positioning elements are rotationally symmetrical positioning cylinders (16, 18), of which one is rotatably mounted on the wheel-side carrier part (12) and the other on the axle-side carrier part (14), and **in that** the two positioning cylinders (16, 18) are interconnected by means of an axis of rotation (24) which is perpendicular to the oblique surfaces (16b, 18b).

4. Wheel suspension according to either claim 2 or claim 3, **characterised in that** the drives (26, 28) are electric motors which act directly or indirectly on the positioning elements (16, 18) by means of a gearbox (30).

5. Wheel suspension according to any of claims 2 to 4, **characterised in that** the stop faces (16a, 18a) which are adjacent to each other between the wheel-side carrier part (12), the axle-side carrier part (14) and the positioning elements (16, 18) and/or the adjacent oblique surfaces (16b, 18b) of the positioning elements (16, 18) are supported by means of axial antifriction bearings.

6. Wheel suspension according to any of claims 2 to 5, **characterised in that** the wheel guiding element of the wheel suspension (32) is a wheel carrier (42) articulated to the body (39) of the motor vehicle by means of independent links and/or transverse links (34, 36).

7. Wheel suspension according to any of preceding claims 2 to 6, **characterised in that** the wheel guiding element of the wheel suspension is a semi-trailing link (48) of a rear independent wheel suspension (46) of the motor vehicle.

8. Wheel suspension according to any of preceding claims 2 to 5, **characterised in that** the wheel guiding element is a longitudinal arm (52) of a semi-independent rear suspension (50) for motor vehicles.

## Revendications

1. Procédé de fabrication de différentes variantes de véhicules, dans lequel, dans une variante de confort, une roue de véhicule (44) est supportée en rotation directement dans une pièce de guidage de roue (42 ; 48 ; 52) d'une suspension de roue (32 ; 46 ; 50), **caractérisé en ce que**,
dans une variante de dynamique de conduite, un organe de réglage (10) destiné au réglage du carrossage et/ou du pincement de la roue de véhicule est monté entre la pièce de guidage de roue (42 ; 48 ; 52) et la roue de véhicule (44) dans la direction axiale en tant que pièce rapportée,
**en ce que** l'organe de réglage (10) est divisé en une pièce de support (12) recevant la roue (44), en une pièce de support (14) raccordée à la suspension de roue (32 ; 46; 50) et en deux éléments de réglage (16, 18) disposés entre les dites pièces de support et pouvant tourner l'un par rapport à l'autre ainsi que par rapport aux pièces de support (12, 14) autour d'un axe de rotation (20, 22) commun, organes de réglage qui coopèrent avec des faces obliques (16b, 18b) tournées l'une vers l'autre et inclinées selon un angle défini (γ) par rapport à l'axe de rotation (20, 22), et
**en ce que** les éléments de réglage (16, 18) peuvent, par le biais de deux entraînements (26, 28) pilotables disposés sur la pièce de support (12) côté roue et sur la pièce de support (14) côté essieu, tourner individuellement ou en commun dans le même sens de rotation ou dans un sens de rotation opposé.

2. Suspension de roue pour un véhicule, en particulier pour un procédé selon la revendication 1, avec une pièce de guidage de roue (42 ; 48 ; 52) qui est reliée à la carrosserie du véhicule (39) par le biais d'un assemblage de bras de liaison (34, 36), et dans laquelle, dans une variante de confort de véhicule, une roue de véhicule (44) est supportée en rotation directement, **caractérisée en ce que**, pour la réalisation d'une variante de dynamique de conduite, un organe de réglage (10) peut être intercalé entre la roue de véhicule (44) et la pièce de guidage de roue (42 ; 48 ; 52) en tant que pièce rapportée, avec laquelle pièce de réglage le carrossage et/ou le pincement de la roue de véhicule (44) peut être réglé,
**en ce que**, dans la variante de dynamique de conduite, un organe de réglage (10) destiné au réglage du carrossage et/ou du pincement de la roue de véhicule est monté entre la pièce de guidage de roue (42; 48 ; 52) et la roue de véhicule (44) dans la direction axiale,
**en ce que** l'organe de réglage (10) est divisé en une pièce de support (12) recevant la roue (44), en une pièce de support (14) raccordée à la suspension de roue (32 ; 46 ; 50) et en deux éléments de réglage (16, 18) disposés entre les dites pièces de support et pouvant tourner l'un par rapport à l'autre ainsi que par rapport aux pièces de support (12, 14) autour d'un axe de rotation (20, 22) commun, organes de réglage qui coopèrent avec des faces obliques (16b, 18b) tournées l'une vers l'autre et inclinées selon un angle défini (γ) par rapport à l'axe de rotation (20, 22), et
**en ce que** les éléments de réglage (16, 18) peuvent, par le biais de deux entraînements (26, 28) pilotables disposés sur la pièce de support (12) côté roue et sur la pièce de support (14) côté essieu, tourner individuellement ou en commun dans le même sens de rotation ou dans un sens de rotation opposé.

3. Suspension de roue selon la revendication 2, **caractérisée en ce que** les éléments de réglage sont des cylindres de réglage (16, 18) à symétrie de rotation dont l'un est supporté en rotation sur la pièce de support (12) côté roue et l'autre sur la pièce de support (14) côté essieu, et **en ce que** les deux cylindres de réglage (16, 18) sont raccordés l'un à l'autre par le biais d'un axe rotatif (24) perpendiculaire aux faces obliques (16b, 18b).

4. Suspension de roue selon la revendication 2 ou 3, **caractérisée en ce que** les entraînements (26, 28) sont des moteurs électriques qui agissent sur les éléments de réglage (16, 18) directement ou indirectement par le biais d'une transmission (30).

5. Suspension de roue selon une des revendications précédentes 2 à 4, **caractérisée en ce que** les faces de démarrage (16a, 18a) voisines l'une de l'autre entre la pièce de support (12) côté roue, la pièce de support (14) côté essieu et les éléments de réglage (16, 18) et/ou les faces inclinées (16b, 18b), voisines l'une de l'autre, des éléments de réglage (16, 18) sont supportées par le biais de roulements axiaux à rouleaux.

6. Suspension de roue selon une des revendications 2 à 5, **caractérisée en ce que** la partie de guidage de roue de la suspension de roue (32) est un support de roue (42) articulé sur la caisse (39) du véhicule automobile par le biais de bras de liaison indépendants et/ou de bras de liaison transversaux (34, 36).

7. Suspension de roue selon une des revendications précédentes 2 à 6, **caractérisée en ce que** la partie de guidage de roue de la suspension de roue est un bras de liaison oblique (48) d'une suspension de roue (46) indépendante arrière du véhicule automobile.

8. Suspension de roue selon une des revendications 2 à 5, **caractérisée en ce que** la partie de guidage de roue est un bras longitudinal (52) d'un essieu arrière à bras de torsion (50) pour véhicules automobiles.
